# FASCICULE DE BREVET EUROPEEN

(11) **EP 1 188 668 B1**
(45) Date de publication et mention de la délivrance du brevet: **01.12.2004**
(21) Numéro de dépôt: 01402288.3
(22) Date de dépôt: 04.09.2001
(51) Int. Cl.: B64G 1/66, F16M 11/12, F16C 11/12

(54) **Dispositif d'orientation et système d'orientation embarqué**
Ausrichtungsvorrichung und Bordausrichtungsanlage
Orientation device and on-board orientation system

(30) Priorité: 18.09.2000 FR 0011859
(43) Date de publication de la demande: 20.03.2002
(73) Titulaire: SNECMA MOTEURS, 75015 Paris (FR)
(72) Inventeur: Chatenet, Luc, 77240 Seine Port (FR)
(74) Mandataire: Thévenet, Jean-Bruno

(56) Documents cités:
- WO-A-97/12806
- US-A- 4 060 315
- US-A- 5 131 611
- US-A- 5 808 439

## Description

### Domaine de l'invention

La présente invention se rapporte à un dispositif d'orientation pour supporter et orienter des charges ou composants dans une position déterminée. Plus particulièrement, l'invention concerne des dispositifs d'orientation de précision destinés à être placés dans des environnements instables sources de vibrations ou de mouvements multiples sur ces systèmes. D'autre part, l'invention concerne également des systèmes d'orientation embarqués dans des engins spatiaux tels que ceux utilisés dans des satellites, des modules d'exploration ou des sondes spatiales.

### Art antérieur

Dans de nombreux domaines, notamment dans ceux de l'aérospatial, de la détection ou des télécommunications, certains composants utilisés doivent être orientés avec une grande précision. Les charges ou composants concernés sont tout type d'appareil qui nécessite une orientation précise pour fonctionner. Ces composants peuvent donc être par exemple des moteurs plasmiques destinés à corriger la position d'un satellite en orbite, des antennes de transmission/réception, des miroirs.... Dans ces applications, les composants sont alors associés à un mécanisme ou dispositif d'orientation qui est conçu pour supporter et placer ceux-ci dans une position déterminée. L'association du composant avec le mécanisme d'orientation forme donc un ensemble qui met en oeuvre à la fois l'orientation et la fonction du composant.

Dans le cas, par exemple, de l'orientation des moteurs plasmiques de correction d'orbites ou des antennes de satellites, la plage de valeurs sur laquelle l'ensemble mécanisme d'orientation-composant évolue, est de l'ordre de quelques degrés. Ainsi, la fiabilité des mécanismes, tant sur le plan de la résistance que de la précision, conditionne le bon fonctionnement des composants qu'ils supportent.

Pour des composants embarqués, c'est-à-dire des composants qui nécessitent un transport jusqu'à un lieu de fonctionnement comme par exemple ceux utilisés dans des satellites qui doivent être placés en orbite par une fusée, deux problèmes se posent. Tout d'abord au cours du transport, le mécanisme d'orientation qui supporte le composant doit être capable de maintenir ce dernier dans une position sécurisée tout en garantissant une bonne tenue mécanique pour ménager au maximum le composant vis-à-vis des vibrations et des contraintes importantes dues aux accélérations. D'autre part, le mécanisme d'orientation doit pouvoir ensuite être opérationnel, c'est-à-dire que le mécanisme doit avoir conservé une orientation prédéterminée ou pouvoir être mis en mouvement pour orienter le composant dans une position déterminée.

En ce qui concerne des composants devant fonctionner pendant un transport ou dans un environnement fortement perturbé (vibrations, chocs, accélération...), les deux problèmes identifiés ci-dessus ne font plus qu'un. En effet, dans ce cas, le système doit pouvoir affranchir au maximum le composant des perturbations mécaniques engendrées par ses conditions d'utilisation tout en assurant une orientation précise du composant.

En considération de ces problèmes, de nombreux systèmes d'orientation ont été envisagés mais ceux-ci présentent en général une structure mécanique très compliquée qui alourdie de façon importante la masse et le coût de l'ensemble à transporter ou à utiliser sans pouvoir réellement affranchir le composant supporté des chocs ou des vibrations pendant le transport ou le fonctionnement.

Parmi les systèmes d'orientation connus, on trouve des mécanismes mettant en oeuvre des cardans ou des axes. Ces systèmes souffrent d'un inconvénient majeur qui est lié aux éléments d'articulations utilisés. En effet, les cardans ou les axes utilisés dans ces systèmes ne peuvent assurer un maintient stable du composant et répercutent de grandes vibrations sur le composant au cours du transport. Afin de maintenir l'ensemble dans une position stable pendant le transport, des solutions pour bloquer le système d'orientation ont été envisagées. Elles consistent, par exemple, en un dispositif tel que décrit dans le document High Performance Reactionless Scan Mechanism - E. I. William, R.T. Summers, M.A. Ostaszewski - Ball Aerospace - 29^{th} Aerospace Mechanism Symposium - NASA Conference Publication 3293, ce dispositif présentant un mécanisme d'orientation à cardans qui sont "verrouillés" pour le lancement au niveau des actionneurs. Cependant, dans un tel mécanisme, les cardans ne sont immobilisés qu'au niveau des actionneurs laissant les cardans avec un certain degré de mouvement suffisant pour transmettre des vibrations non souhaitables sur la charge.

Une autre solution, présentée dans le document THruster orientation mechanism - S. Mankai - Alcatel Space Industries - 8^{th} European Space Mechanisms and Tribology Symposium - ESA SP-438, consiste en un système d'orientation de poussée plasmique qui comprend deux moteurs plasmiques disposés sur une même plaque supportée par des amortisseurs en silicone et un cardan à deux axes équipé de roulements. Ce système est orienté par des actionneurs linéaires à vis à rouleau. L'ensemble de la structure mécanique de ce système est verrouillé par un assemblage de plaques de maintien et de boulons équipés d'un dispositif à couteaux pyrotechniques pour libérer l'ensemble sur le lieu de fonctionnement. Cette solution n'est pas satisfaisante car les chocs dus aux dispositifs pyrotechniques ne sont pas souhaitables sur des composants sensibles tels que des moteurs plasmiques. De plus, ce système est très lourd, à savoir une masse de 17 kg alors que la masse maximum requise pour ce type de système appliqué à la propulsion plasmique de satellite est au maximum de 8 kg. Enfin, hormis sa masse importante, ce système demeure toujours très vibrant.

### Objet et description succincte de l'invention

La présente invention vise à remédier aux inconvénients précités et à réaliser un dispositif d'orientation simple capable de cumuler avec une même structure la fonction de stabilisation et d'orientation.

Ces buts sont atteints grâce à un dispositif d'orientation pour supporter une charge sur un élément de support, la charge étant supportée au-dessus de l'élément de support par des moyens de liaison mobiles, caractérisé en ce que les moyens de liaison mobiles comprennent au moins trois bras de liaison distincts répartis autour de la charge, chaque bras de liaison comportant un élément flexible ayant une première extrémité reliée à l'élément de support par une première articulation à un seul degré de liberté et une seconde extrémité reliée à la charge par une seconde articulation à un seul degré de liberté, et en ce que le dispositif d'orientation comprend en outre au moins un moyen de transmission de mouvement disposé entre l'élément de support et la charge pour orienter la charge relativement à l'élément de support.

Le dispositif selon l'invention permet donc de relier une charge à un élément de support par des liaisons sans jeu, ce qui donne une raideur supplémentaire à l'ensemble tout en conservant une certaine mobilité pour l'orientation.

Selon un aspect particulier de l'invention, la charge comprend en outre une chape de fixation reliée aux bras de liaisons.

Selon un aspect de l'invention, dans chaque bras de liaison, la première articulation comprend un premier axe de rotation supportant la première extrémité de l'élément flexible, le premier axe de rotation étant fixé à l'élément de support par un organe de fixation et la seconde articulation comprend un second axe de rotation supportant la seconde extrémité de l'élément flexible, le second axe de rotation étant fixé à la charge par un organe de fixation, les premier et second axes de rotation de chaque bras de liaison étant parallèles entre eux et perpendiculaires à l'élément flexible lorsque le dispositif se trouve dans sa position initiale.

Ainsi, grâce à ces articulations assemblées à chacune de ses extrémités et grâce à l'élément flexible qui est relié à ces articulations, chaque bras de liaison conserve une raideur nécessaire au support de la charge tout en restant mobile selon différentes directions pour réaliser une orientation déterminée de la charge supportée.

Selon une caractéristique de l'invention, le moyen de transmission de mouvement comprend un actionneur formé d'un élément stator fixé à l'élément de support, l'élément stator supportant un plateau rotatif ayant un élément de retenue fixé de façon excentrée sur le plateau et sur lequel est attachée une première rotule disposée à une extrémité d'une bielle, une seconde rotule disposée à l'autre extrémité de la bielle étant attachée à un élément de retenue disposé sur la charge supportée, les première et seconde rotules pourvues aux extrémités de la bielle étant libres en rotation autour de leur élément de retenue respectif.

Avec ce type d'actionneur, le dispositif peut être orienté dans de nombreuses directions sans que l'actionneur ne soit directement relié à celui-ci, ce qui évite d'alourdir la charge et de lui transmettre des vibrations supplémentaires.

Selon une autre caractéristique de l'invention, le moyen de transmission de mouvement comprend un actionneur formé d'un élément stator fixé à l'élément de support, l'élément stator supportant un plateau rotatif ayant une première articulation à un seul degré de liberté fixée de façon excentrée sur le plateau et reliant une première extrémité d'un élément flexible, la seconde extrémité de l'élément flexible étant reliée à la charge par une seconde articulation à un seul degré de liberté.

La rigidité de l'ensemble du dispositif peut être encore accrue en réalisant ainsi des liaisons sans jeu pour le moyen de transmission de mouvement.

Selon un aspect de l'invention, l'élément stator comprend un moteur de positionnement du plateau rotatif.

Le dispositif peut ainsi orienter la charge qu'il supporte en fonction des lois de commande appliquées sur les actionneurs.

Selon un autre aspect de l'invention, l'élément stator comprend un mécanisme d'entraînement du plateau rotatif, le mécanisme étant irréversible.

Avec un tel mécanisme irréversible, la charge peut être maintenue dans une orientation prédéterminée sans que les actionneurs soient alimentés en puissance.

Selon un aspect de l'invention, l'élément flexible comprend une structure lamifiée formée d'un empilement d'une pluralité de lames.

Une telle structure offre un compromis entre la flexibilité et la rigidité nécessaire à chaque élément flexible pour un support stabilisé de la charge et pour permettre son orientation.

Plus particulièrement, chacune des lames de la pluralité de lames est formée d'une lame de métal recouverte d'un matériau élastique.

Ainsi, la présence de métal dans les lames assure la rigidité de chaque élément flexible avec une souplesse de contact entre les lames obtenue grâce au matériau de revêtement élastique.

Spécifiquement, le métal constituant la lame est de l'acier inoxydable et le matériau élastique de revêtement est du caoutchouc vulcanisé ou de la silicone adhérisée par compression sur le métal.

Pour une utilisation dans l'air le caoutchouc vulcanisé est de préférence utilisé alors que pour une utilisation sous vide la silicone est mieux adaptée.

Plus particulièrement, le dispositif comprend deux moyens de transmission de mouvement disposés selon deux directions distinctes.

La charge peut alors être orientée suivant deux angles d'inclinaison.

Selon un mode de réalisation de l'invention, les moyens de liaison mobiles comprennent quatre bras de liaison répartis uniformément autour de la charge supportée.

Le dispositif ainsi constitué forme avantageusement le début d'une structure pyramidale à base carrée sur laquelle est supportée la charge.

Selon un autre mode de réalisation de l'invention, les moyens de liaison mobiles comprennent cinq bras de liaison répartis uniformément autour de la charge supportée.

Le dispositif ainsi constitué forme avantageusement le début d'une structure pyramidale à base pentagonale sur laquelle est supportée la charge.

Selon un aspect particulier, l'élément de support est une partie de la structure externe d'un appareil.

Selon toujours un aspect particulier de l'invention, la charge comprend un moteur plasmique, une antenne, un émetteur optique ou un récepteur optique.

Le dispositif selon l'invention permet le support et l'orientation de charges constituées d'éléments fragiles même dans des environnements instables.

La présente invention à également pour objet un système d'orientation comprenant une pluralité de dispositifs d'orientation tels que décrits ci-dessus, les dispositifs étant disposés l'un à côté de l'autre et deux dispositifs adjacents utilisant au moins un moyen de transmission de mouvement commun.

Les dispositifs sont ainsi orientés en série par des moyens de transmission de mouvement communs sur lesquels s'équilibrent les efforts exercés au niveau des bielles.

L'invention a encore pour objet un système embarqué dans un lanceur, le système comprenant un appareil ayant au moins une charge supportée par un dispositif d'orientation tel que décrit ci-dessus.

Le dispositif selon l'invention offre par conséquent une solution économique et fiable pour le lancement d'engins spatiaux équipés de charges comprenants des éléments sensibles aux vibrations ou aux accélérations de toute sorte.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels:
- la figure 1 est une vue schématique en perspective d'un dispositif d'orientation conformément à un mode de réalisation selon l'invention,
- la figure 2 est une schématique en perspective montrant une structure lamifiée conformément à un mode de réalisation selon l'invention,
- la figure 3 est une vue schématique de côté du dispositif d'orientation de la figure 1,
- la figure 4 est une vue schématique de côté du dispositif d'orientation de la figure 1 montrant le dispositif après orientation,
- la figure 5 est une vue schématique de côté d'un système d'orientation comprenant deux dispositifs d'orientation conformément à un mode de réalisation selon l'invention, et
- la figure 6 est une vue schématique d'un lanceur équipé d'un système d'orientation embarqué selon un mode de réalisation de l'invention.

### Description détaillée des modes de réalisation de l'invention

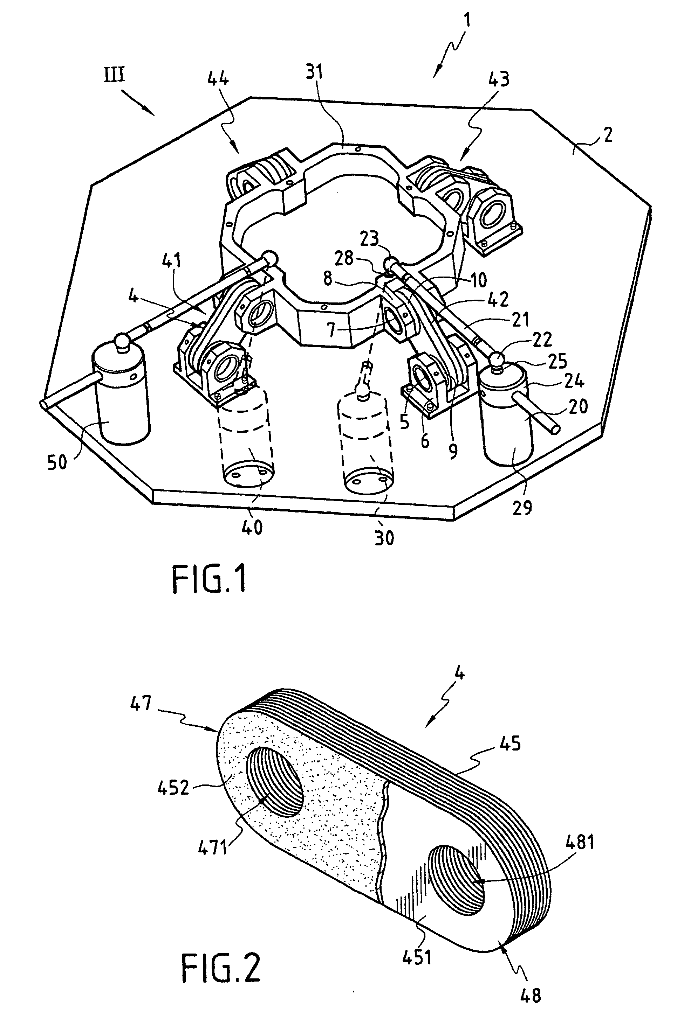

La figure 1 représente un dispositif d'orientation conformément à un mode de réalisation de l'invention. Le dispositif selon l'invention peut être utilisé pour supporter et orienter une charge. On entend par "charge" tout élément ou composant sensible aux perturbations telles que des vibrations, chocs ou accélérations et/ou demandant une orientation précise comme par exemple un moteur, une antenne, un émetteur ou récepteur optique. Le dispositif d'orientation 1 prend appui sur un élément de support 2. Cet élément de support lorsqu'il se présente sous la forme d'une plaque de support indépendante, telle que représentée sur la figure 1, a la fonction de base de support pour le dispositif afin de supporter une charge ou un composant via le dispositif 1 en formant ainsi un ensemble distinct d'un appareil.

Alternativement, le dispositif selon l'invention peut relier à un appareil la charge ou le composant destiné à fonctionner sur celui-ci. L'élément de support 2 peut être fixé directement à l'appareil. Dans ce dernier cas, un tel élément de support peut aussi être une partie intégrante d'une structure externe de l'appareil sur laquelle sera fixé le dispositif d'orientation 1.

Afin de pouvoir expliquer clairement la structure et le fonctionnement du dispositif d'orientation objet de la présente invention, le dispositif d'orientation est ici tout d'abord présenté en étant uniquement reliée à une chape 31 sans charge supportée et sans être relié à la structure d'un appareil. La chape 31 peut être soit une base de support sur laquelle la charge est fixée, soit un élément de la structure même de la charge. On verra dans la suite de la description comment le dispositif peut être intégré à la structure d'un appareil et comment il peut comprendre une charge à orienter utilisée par l'appareil.

Le dispositif d'orientation 1 de la figure 1 comprend quatre bras de liaison mobiles 41, 42, 43 et 44 qui supportent la chape 31. Chaque liaison comprend un élément flexible qui peut être constitué d'une structure lamifiée 4. La figure 2 montre une structure lamifiée 4 qui est formée d'un empilement de plusieurs lames 45 constituées d'un métal 451, tel que de l'acier inoxydable, recouvert d'un revêtement élastique 452 qui peut consister en un caoutchouc vulcanisé, si le dispositif est utilisé dans l'air, ou en une silicone adhérisée par compression si le dispositif est destiné à être utilisé dans le vide, la silicone présentant une meilleure tenue dans le vide que le caoutchouc. Les lames 45 sont juxtaposées l'une sur l'autre pour obtenir la structure lamifiée 4 et présentent alors, entre elles, des surfaces de contact constituées par un matériau souple et amortissant. Cette fabrication permet d'obtenir des lames qui présentent une bonne rigidité du fait de la présence du métal tout en ayant une certaine souplesse dans les pliages/torsions grâce au revêtement élastique. La nature des matériaux composant les lames ainsi que les dimensions et le nombre de celles-ci sont en fonction du degré de rigidité ou de souplesse que l'on souhaite obtenir sur la structure lamifiée 4 résultante.

Comme illustré en figures 1 et 2, chaque structure lamifiée 4 comprend une première extrémité 47 la plus proche de l'élément de support qui comprend une ouverture circulaire 471 pour recevoir un premier axe de rotation 5 qui est lui-même maintenu sur l'élément de support par un organe de fixation 6, ici sous la forme d'une double entretoise fixée à une semelle reposant sur l'élément support 2. La structure 4 présente également à sa seconde extrémité 48 une autre ouverture circulaire 481 dans laquelle vient se loger un second axe de rotation 7, maintenu sur la chape 31 par un organe de fixation 8 similaire à la double entretoise 6.

Les deux extrémités de l'élément flexible constitué de la structure lamifiée 4 forment donc chacune, avec leur axe de rotation respectif, une première et seconde articulation 9 et 10 à un seul degré de liberté pour chaque bras de liaison mobile. Ces articulations à un seul degré de liberté peuvent être réalisées à l'aide de pivots flexibles ou de paires de roulements pré-chargés donnant ainsi des liaisons sans jeu.

Lorsque le dispositif est dans sa position initiale, c'est-à-dire lorsqu'aucune orientation n'est imposée au dispositif, les premier et second axes de rotation 5, 7 de chaque bras de liaison mobile sont parallèles entre eux suivant un plan perpendiculaire à celui de l'élément flexible du bras considéré.

La structure du dispositif d'orientation selon l'invention ainsi constituée permet d'éviter des liaisons mécaniques directes entre l'élément de support 2 et la chape 31 qui constitue le point d'attache de la charge au dispositif. En d'autres termes, les moyens de liaisons mobiles du dispositif de la présente invention permettent de réaliser des liaisons sans jeu qui, à la différence des liaisons articulées telles que des cardans ou des rotules, présentent une rigidité qui minimise considérablement la propagation, sur la charge, des mouvements externes exercés sur l'élément de support 2. Les liaisons mobiles selon l'invention sont articulées à leurs extrémités autour de leur axe de rotation respectif selon un seul degré de liberté. La flexibilité des structures lamifiées 4 permet d'obtenir les autres degrés de mouvement nécessaires à l'orientation de la charge.

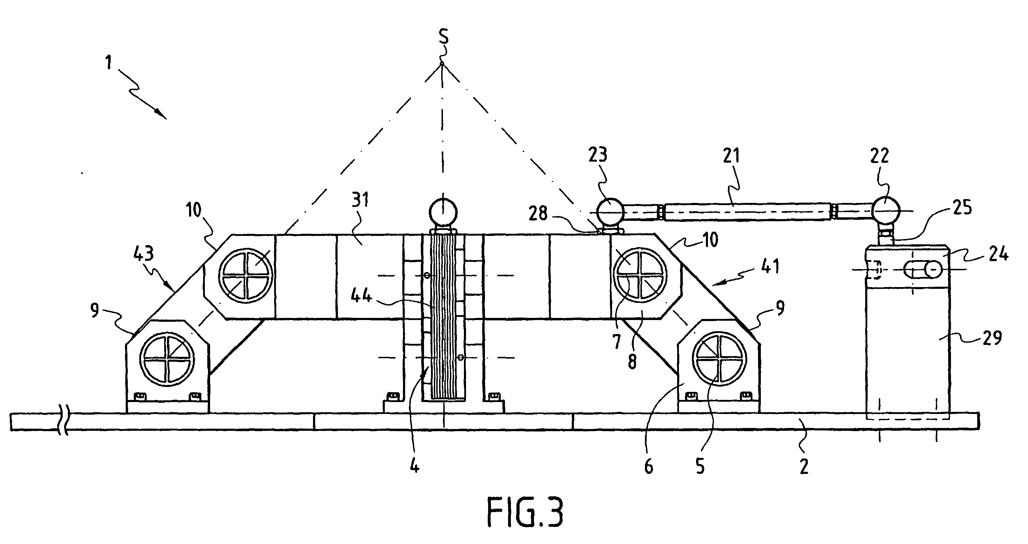

La figure 3 montre que le dispositif d'orientation forme le début d'une structure pyramidale dont les arêtes sont définies par le prolongement des structures lamifiées 4. Les lames 45 qui composent la structure lamifiée 4 sont donc concourantes dans une position qui peut correspondre à la configuration initiale du dispositif d'orientation tel que représenté en figures 1 et 3. Cette disposition donne donc une raideur supplémentaire à l'ensemble du mécanisme. Dans cette position, les projections de ces lames se rejoignent en un point S, comme indiqué sur la figure 3. Le point S définit le sommet de la pyramide dont la base est matérialisée par la structure du dispositif d'orientation 1. Un des effets techniques du dispositif selon la présente invention réside dans la structure pyramidale définie par le prolongement des lames des bras de liaison mobiles. En effet, si le centre de gravité ou d'inertie de la charge supportée coïncide sensiblement avec le sommet S de la pyramide lorsque celle-ci est reliée au dispositif d'orientation, alors la charge se trouve dans une position où l'influence des vibrations et des mouvements externes sont minimums. En d'autres termes, cette disposition permet de diminuer l'effort maximal exercé dans les lames 45 au cours des accélérations imposées à l'ensemble. Elle permet donc d'alléger l'ensemble du dispositif et de diminuer le coefficient d'amplification dynamique vu par la charge.

Le mode réalisation du dispositif d'orientation illustré dans les différentes figures de la présente description comprend quatre bras de liaison mobiles pour maintenir en hauteur, relativement au premier élément de support 2, la chape 31 et/ou la charge. La présente invention n'est toutefois pas limitée à ce nombre. En effet, le nombre de bras de liaison peut être de trois, cinq ou plus. Ce nombre dépend de la structure du dispositif d'orientation désirée. Par exemple, la figure 1 montre un dispositif d'orientation selon l'invention qui comprend quatre bras liaison mobiles 41, 42, 43 et 44 uniformément disposées autour de la chape 31, définissant ainsi le début d'une structure pyramidale à base carrée. Un autre mode de réalisation présentant trois bras de liaison disposés uniformément autour de la chape 31 (ou charge) définirait le début d'une structure pyramidale à base triangulaire et un autre mode comprenant cinq moyens de liaison définirait dans ce cas le début d'une structure pyramidale à base pentagonale et ainsi de suite.

Le dispositif d'orientation selon l'invention permet donc de supporter des charges selon une orientation déterminée tout en conservant à la charge une position de stabilité durant des transports ou dans des conditions d'utilisation telles que la proximité de machines génératrices de chocs, vibrations ou mouvements. Pour optimiser la stabilité de la charge supportée par le dispositif 1 selon une orientation prédéterminée, il faut, de préférence, que le centre de gravité ou d'inertie de la charge ne se trouve pas trop éloigné du sommet S de la structure pyramidale définit par le dispositif.

Pour orienter une charge supportée par le dispositif 1, deux actionneurs 20 et 50 sont disposés entre l'élément de support 2 et la chape 31. Les deux actionneurs 20 et 50 peuvent également être placés à des positions différentes autour du dispositif 1 comme par exemple celles qui sont représentées en position 30 et 40. Les actionneurs représentés en figure 1 comprennent chacun un élément 29 disposé sur l'élément de support 2. L'élément 29 supporte un plateau rotatif 24 qui peut être mis en mouvement par un mécanisme, motorisé ou non, inclus dans l'élément 29. Ces actionneurs sont du type à bielles et rotules, c'est-à-dire que chaque actionneur est relié à la chape 31 ou bien directement à la charge par une bielle 21 comprenant, à ses deux extrémités, une première et une seconde rotules 22 et 23. Une première extrémité de la bielle 21 est reliée au plateau rotatif 24 par l'intermédiaire de la première rotule 22 qui est attachée à un élément de retenue 25 fixé de façon excentrée sur le plateau 24. La seconde extrémité de la bielle 21 équipée de la seconde rotule 23 est reliée à la chape 31 par un autre élément de retenue 28 fixé à la chape 31. La bielle 21 peut aussi être fixée directement sur la structure de la charge. Grâce aux première et seconde rotules pourvues à ses extrémités, la bielle 21 est libre en rotation autour de ses points d'attache sur l'actionneur et sur la chape ou la charge. Par conséquent en reliant la bielle à la surface supérieure du plateau tournant de façon excentrée, toute rotation de ce dernier est transformée par la bielle en un mouvement linéaire appliqué sur le point d'attache de la bielle à la chape ou à la charge. Pour accroître encore la rigidité de l'ensemble, un élément flexible, de structure analogue à celle qui est représentée en figure 2, associé à des articulations similaires aux articulations 9 et 10 présentées en figure 1, peut être utilisé à la place des bielles, ce qui permet de remplacer les rotules par une articulation à un seul degré de liberté et donc de supprimer tout jeu dans les liaisons à chaque extrémité. Tout comme l'élément de retenue 25 dans la configuration avec bielle, l'articulation à un seul degré de liberté qui est reliée à l'actionneur sera fixée, de façon excentrée, sur le plateau rotatif de ce dernier.

Le type d'actionneur utilisé dans le dispositif selon l'invention est fonction de l'utilisation qui en est faite. En effet, l'orientation du dispositif 1 peut aussi bien être réalisée à partir d'actionneurs linéaires par exemple. Les actionneurs tels que présentés dans les modes de réalisation présentement décrits ont toutefois l'avantage d'être fixés sur l'élément de support 2 qui est externe au dispositif d'orientation 1 et à la charge supportée, ce qui empêche ces actionneurs, d'une part, de transmettre des vibrations supplémentaires à la charge et d'autre part d'alourdir celle-ci. De plus, le nombre d'actionneurs est déterminé par le nombre d'angles d'orientation dont on souhaite disposer. Par exemple, un seul actionneur n'offre qu'un seul angle d'orientation alors que deux actionneurs dont les bielles définissent deux directions sécantes permettent de réaliser une orientation selon deux angles.

En ce qui concerne l'orientation, la disposition des actionneurs autour du dispositif d'orientation 1 a peu d'importance. En effet, c'est la loi de commande qui est appliquée sur les actionneurs qui régit l'orientation du système. L'orientation des bielles reliant les actionneurs à la chape ou à la charge à orienter est déterminée en fonction de la criticité, pour l'ensemble considéré, des raideurs relatives à chacun des degrés de liberté.

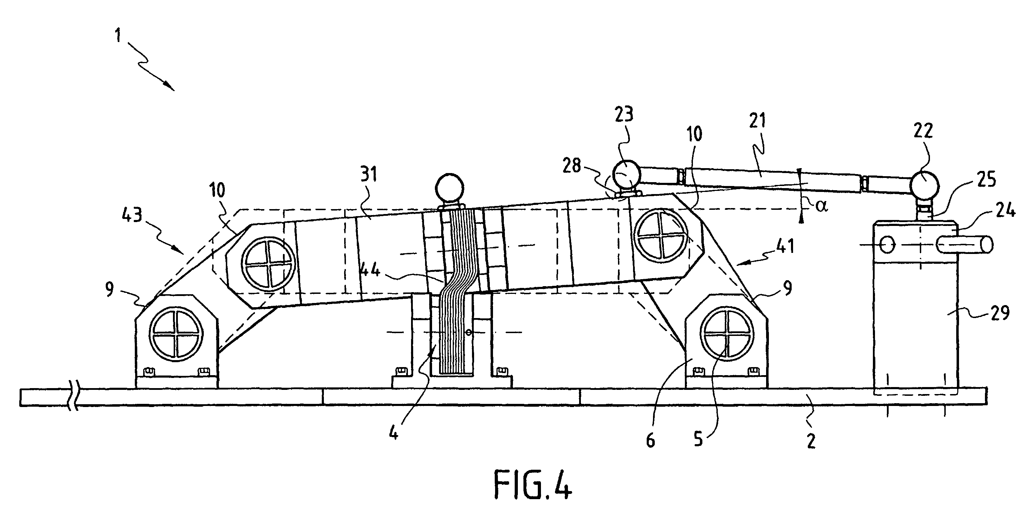

On se réfère maintenant à la figure 4 qui montre le dispositif d'orientation 1 dans une position après mouvement d'un actionneur par rapport à la position initiale du dispositif représentée ici en traits discontinus. L'actionneur concerné dans la figure 4 est disposé dans l'alignement de deux bras de liaison mobiles opposées comme le positionnement de l'actionneur 20, respectivement 50, par rapport aux moyens de liaison mobile 42, 44, respectivement 41, 43, dans la figure 1. Puisque la bielle 21 de l'actionneur 20 est fixée de façon excentrée sur le plateau rotatif 24 de l'actionneur, une rotation du plateau quel que soit le sens entraîne une translation de la bielle dans une direction de retrait par rapport à sa position initiale où le point d'attache de la bielle à l'actionneur est le plus proche du dispositif d'orientation. Ce mouvement de retrait de la bielle 21 suite à une rotation du plateau 24 a pour effet d'exercer une force de tirage sur la chape 31 ou bien sur la charge si la bielle est directement reliée à celle-ci. Grâce aux deux extrémités articulées 9, 10 des deux bras de liaisons mobiles 42 et 44, disposés sensiblement dans l'alignement de la direction de tirage de la bielle, le dispositif 1, relié à la chape 31, s'articule pour incliner le plan défini par la chape d'un angle α par rapport au plan défini par l'élément de support 2. Il faut cependant noter que cette inclinaison n'est rendue possible que par la flexibilité des deux autres bras de liaison mobiles 41 et 43 alignés dans une direction perpendiculaire à celle des bras 42 et 44. En effet, comme on peut le voir sur la figure 4, la structure lamifiée 4 du bras 41 fléchit pour permettre le déplacement longitudinal de la chape vers l'actionneur, le bras 43 (non représenté) présentant un fléchissement symétrique.

Dans la configuration de structure pyramidale à base carrée (4 bras donc 4 arêtes) où l'actionneur est aligné avec deux bras de liaisons mobiles, ces deux bras opposés ne se déplacent que relativement à leurs axes de rotation à un seul degré de liberté alors que les deux autres moyens disposés perpendiculairement fléchissent dans une direction sensiblement orthogonale au plan de rotation de leurs axes. En revanche, dans une configuration où un ou plusieurs actionneurs sont disposés hors de l'alignement de deux bras opposés (tels que les actionneurs 30 et 40 illustrés en figure 1) ou bien avec un dispositif d'orientation comprenant un nombre impair de bras de liaison mobiles, les bras de liaison sont alors animés d'un mouvement qui combine une rotation autour de leurs axes respectifs et un fléchissement ou une torsion de leur élément flexible.

De la même façon, l'orientation obtenue en figure 4 avec l'actionneur 20 ne peut se faire que suivant un seul angle α. Un mouvement combiné de l'actionneur 20 avec celui d'un autre actionneur 50 disposé perpendiculairement à l'actionneur 20 comme représenté en figure 1 permet de réaliser une orientation du dispositif suivant deux angles. Une telle configuration à deux actionneurs permet d'offrir un domaine d'orientation suivant deux angles qui est suffisant pour l'orientation de charges telles que des moteurs plasmiques montés sur des satellites.

La position du dispositif tel que représentée dans la figure 4 correspond à un angle de rotation effectué par l'actionneur 20 de 180° qui est le déplacement maximum que peut réaliser ce type d'actionneur, c'est-à-dire la distance de retrait maximum de la bielle 21. Les angles d'inclinaison qui peuvent être obtenus avec le dispositif précédemment décrit sont au maximum d'environ 30°.

Si les actionneurs utilisés dans le dispositif sont irréversibles, le maintient à une orientation déterminée de la charge peut être obtenue sans que les actionneurs soient alimentés en puissance. Ainsi, grâce à la raideur de structure obtenue avec le dispositif selon l'invention, une charge peut être maintenue à une orientation déterminée tout en restant protégée des phénomènes perturbateurs environnants.

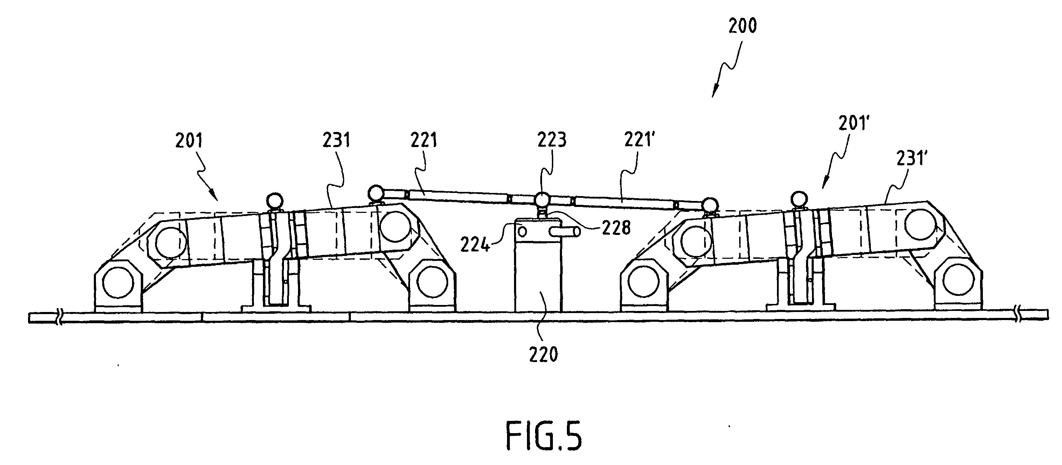

Les domaines d'application du dispositif d'orientation selon l'invention ne sont pas limités à l'utilisation d'un seul ensemble composé d'une charge supportée par le dispositif. En effet, par exemple, pour des raisons de sécurité sur des engins en orbites difficilement accessibles, il peut être indispensable de doubler les charges supportées (antennes, transmetteurs optique...) pour pouvoir palier à une déficience de l'une d'entre elles. Toujours à titre d'exemple, pour réaliser une correction d'attitude ou de positionnement d'un satellite par propulsion plasmique, un système comprenant plusieurs moteurs plasmiques chacun supporté par un dispositif d'orientation propre peut être nécessaire. La figure 5 montre un système d'orientation 200 qui comprend deux dispositifs 201, 201', similaires au dispositif décrit plus haut, qui sont disposés symétriquement l'un à côté de l'autre par rapport à un actionneur 220. Le dispositif d'orientation 201 est relié à l'actionneur 220 par une bielle 221 et le dispositif 201' est relié au même actionneur 220 par une seconde bielle 221'. Les bielles 221 et 221' sont attachées à un élément de retenue 228 fixé de façon excentrée sur le plateau rotatif 224 de l'actionneur au moyen d'une rotule 223 commune aux extrémités considérées des bielles 221 et 221'. Dans cette configuration, lorsque le plateau rotatif 224 est mis en mouvement, la bielle 221 exerce une force de tirage sur la chape 231 du dispositif 201 tandis que la bielle 221' exerce une force opposée qui repousse la chape 231' du dispositif 201'. Ces forces respectivement exercées sur les chapes 231 et 231' entraîne une inclinaison de ces dernières suivant une même orientation.

Le système 200 à double dispositif d'orientation avec actionneur commun présente un avantage supplémentaire au niveau de l'équilibrage de l'ensemble ainsi formé. Effectivement, comme l'actionneur est symétriquement relié aux deux dispositifs 201, 201', les efforts exercés par les dispositifs situés de chaque côté de l'actionneur s'équilibrent sur ce dernier. L'homme du métier comprendra sans difficulté que le système d'orientation 200, tel que représenté en figure 5, peut comprendre un nombre indéterminé de dispositifs d'orientation reliés en série les uns aux autres par des actionneurs communs. Dans tous les cas, il faut vérifier que les lois de commande appliquées sur les actionneurs communs à deux dispositifs adjacents concordent.

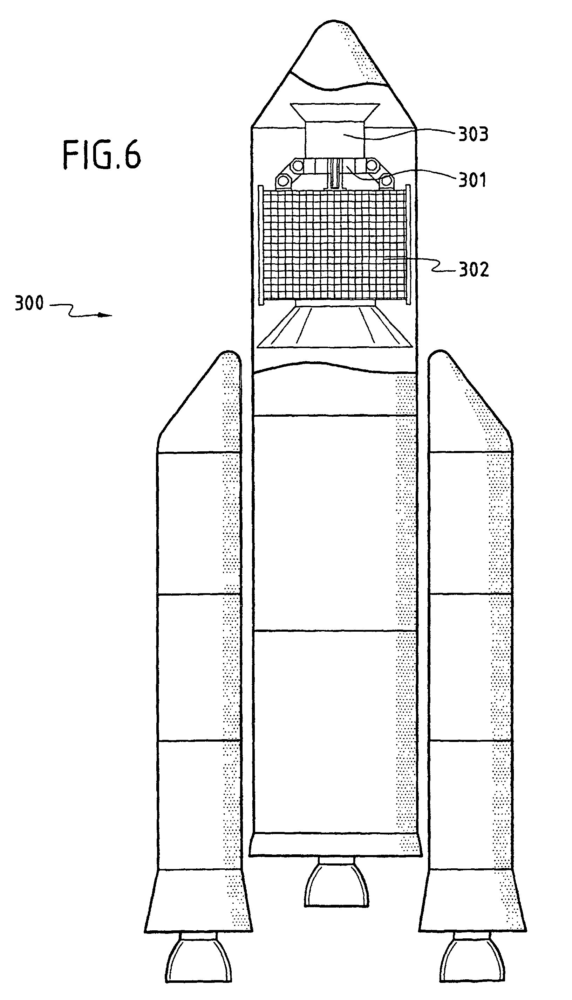

La figure 6 illustre un exemple d'application du dispositif selon l'invention. Le dispositif d'orientation jusqu'ici représenté, pour des raisons de clarté, uniquement avec une chape, est maintenant présenté sous une forme intégrée à un système embarqué qui comprend un satellite 302 qui supporte, via un dispositif d'orientation 301 conforme à l'invention, une charge matérialisée par un moteur plasmique 303. Le dispositif 301 est relié directement à la structure supérieure du satellite 302 qui constitue alors l'élément de support décrit précédemment. Le moteur plasmique 303 est donc supporté en hauteur relativement à la structure supérieure de satellite 302 par les bras de liaison mobiles du dispositif 301. Comme expliqué plus haut, le moteur plasmique peut être directement relié aux bras de liaison par sa structure externe ou être fixé à une chape, elle-même reliée aux bras de liaison du dispositif d'orientation.

Grâce à la disposition en forme de base de pyramide du dispositif qui définit par projection un sommet S avec lequel on fait coïncider sensiblement le centre de gravité ou d'inertie de la charge supportée, le support de charges ou composants très sensibles aux perturbations externes est rendu possible même dans des environnements sévères. En effet, dans le cas particulier, par exemple, d'un moteur plasmique équipé sur un satellite qui doit être embarqué sur un lanceur spatial, les cathodes du moteur qui doivent être isolées thermiquement sont montées en porte-à-faux ce qui les rend très sensibles aux accélérations externes. De plus, les anodes des moteurs plasmiques sont en céramique, un matériau bien connu qui peut subir des détériorations quand il est soumis à des vibrations.

Le dispositif d'orientation objet de la présente invention offre donc une solution économique et fiable pour le support et l'orientation de charges sensibles dans des environnements perturbateurs. Le dispositif présente en outre, contrairement aux dispositifs de l'art antérieur, non seulement l'avantage d'être peut encombrant et donc facilement intégrable du fait de sa hauteur réduite, mais aussi d'être léger. Ces avantages prennent une dimension encore plus importante lorsque que le dispositif est destiné à être intégré dans des systèmes embarqués, domaine où les contraintes de poids, d'encombrement, de fiabilité et de coût sont déterminantes pour la validation de tels dispositifs.

## Revendications

1. Dispositif d'orientation (1) pour supporter une charge sur un élément de support (2), ladite charge étant supportée au dessus dudit élément de support (2) par des moyens de liaison mobiles, **caractérisé en ce que** lesdits moyens de liaison mobiles comprennent au moins trois bras de liaison (41, 42, 43) distincts répartis autour de la charge, chaque bras de liaison comportant un élément flexible (4) ayant une première extrémité (47) reliée à l'élément de support (2) par une première articulation à un seul degré de liberté (9) et une seconde extrémité (48) reliée à la charge par une seconde articulation à un seul degré de liberté (10), et **en ce que** ledit dispositif d'orientation comprend en outre au moins un moyen de transmission de mouvement (20) disposé entre l'élément de support et la charge pour orienter ladite charge relativement audit élément de support.

2. Dispositif selon la revendication 1, **caractérisé en ce que** la charge comprend en outre une chape (31) de fixation, ladite chape étant reliée audits au moins trois bras de liaisons.

3. Dispositif selon la revendication 1 ou 2, **caractérisé en ce que**, dans chaque bras de liaison, la première articulation (9) comprend un premier axe de rotation (5) supportant la première extrémité (47) de l'élément flexible (4), ledit premier axe de rotation (5) étant fixé à l'élément de support (2) par un organe de fixation (6) et **en ce que** la seconde articulation (10) comprend un second axe de rotation (7) supportant la seconde extrémité (48) dudit élément flexible, ledit second axe de rotation (7) étant fixé à la charge par un organe de fixation (8), lesdits premier et second axes de rotation de chaque bras de liaison étant parallèles entre eux et perpendiculaires à l'élément flexible (4) lorsque que le dispositif se trouve dans sa position initiale.

4. Dispositif selon l'une quelconque des revendications 1 à 3, **caractérisé en ce que** ledit au moins un moyen de transmission de mouvement (20) comprend un actionneur formé d'un élément stator (29) fixé à l'élément de support (2), ledit élément stator (29) supportant un plateau rotatif (24) ayant un élément de retenue (25) fixé de façon excentrée sur ledit plateau et sur lequel est attachée une première rotule (22) disposée à une extrémité d'une bielle (21), une seconde rotule (23) disposée à l'autre extrémité de ladite bielle étant attachée à un élément de retenue (28) disposé sur la charge supportée, lesdites première et seconde rotules pourvues aux extrémités de la bielle étant libres en rotation autour de leur élément de retenue respectif.

5. Dispositif selon l'une quelconque des revendications 1 à 3, **caractérisé en ce que** ledit au moins un moyen de transmission de mouvement (20) comprend un actionneur formé d'un élément stator (29) fixé à l'élément de support (2), ledit élément stator (29) supportant un plateau rotatif (24) ayant une première articulation à un seul degré de liberté fixée de façon excentrée sur ledit plateau et reliant une première extrémité d'un élément flexible (4), la seconde extrémité dudit élément flexible étant reliée à la charge par une seconde articulation à un seul degré de liberté.

6. Dispositif selon la revendication 4 ou 5, **caractérisé en ce que** l'élément stator (29) comprend un moteur de positionnement du plateau rotatif (24).

7. Dispositif selon la revendication 4 ou 5, caractérisé en ce l'élément stator (29) comprend un mécanisme d'entraînement du plateau rotatif (24), ledit mécanisme étant irréversible.

8. Dispositif d'orientation selon l'une quelconque des revendication 1 à 7, **caractérisé en ce que** l'élément flexible (4) comprend une structure lamifiée formée d'un empilement d'une pluralité de lames (45).

9. Dispositif selon la revendication 8, **caractérisé en ce que** chacune des lames (45) de la pluralité de lames est formée d'une lame de métal (451) recouverte d'un matériau élastique (452).

10. Dispositif selon la revendication 9, **caractérisé en ce que** le métal constituant ladite lame (451) est de l'acier inoxydable et **en ce que** le matériau élastique (452) de revêtement est du caoutchouc vulcanisé ou de la silicone adhérisée par compression sur le métal.

11. Dispositif selon l'une quelconque des revendications 1 à 10, **caractérisé en ce qu'**il comprend deux moyens de transmission de mouvement (20, 50) disposés selon deux directions distinctes.

12. Dispositif selon l'une quelconque des revendications 1 à 11, **caractérisé en ce que** lesdits moyens de liaison mobiles comprennent quatre bras de liaison (41, 42, 43, 44) répartis uniformément autour de la charge supportée.

13. Dispositif selon lune quelconque des revendications 1 à 11, **caractérisé en ce que** lesdits moyens de liaison mobiles comprennent cinq bras de liaison répartis uniformément autour de la charge supportée

14. Dispositif selon l'une quelconque des revendications 1 à 13, **caractérisé en ce que** l'élément de support (2) est une partie de la structure externe d'un appareil (102).

15. Dispositif selon l'une quelconque des revendications 1 à 14, **caractérisé en ce que** la charge comprend un moteur plasmique, une antenne, un émetteur optique ou un récepteur optique.

16. Système d'orientation (200) comprenant une pluralité de dispositifs d'orientation (201, 201') selon l'une quelconque des revendications 1 à 15, lesdits dispositifs étant disposés l'un à côté de l'autre et deux dispositifs adjacents utilisant au moins un moyen de transmission de mouvement (220) commun.

17. Système embarqué dans un lanceur (300), ledit système comprenant un appareil (302) ayant au moins une charge (303) supportée par un dispositif d'orientation (301) selon l'une quelconque des revendications 1 à 15 ou un système d'orientation selon la revendication 16.

## Claims

1. A pointing device (1) for supporting a load on a support element (2), said load being supported above said support element (2) by moving link means, **characterised in that** said moving link means comprise at least three distinct link arms (41, 42, 43) distributed around the load, each link arm comprising a flexible element (4) having a first end (47) connected to the support element (2) via a first hinge having a single degree of freedom (9), and a second end (48) connected to the load via a second hinge having a single degree of freedom (10), and **in that** said pointing device further comprises at least one means for transmitting movement (20) disposed between the support element and the load to point said load relative to said support element.

2. A device according to claim 1, **characterised in that** the load further comprises a fixing bracket (31), said bracket being connected to said at least three link arms.

3. A device according to claim 1 or 2, **characterised in that**, in each link arm, the first hinge (9) has a first pin (5) supporting the first end (47) of the flexible element (4), said first pin (5) being fixed to the support element (2) by a fixing member (6), and **in that** the second hinge (10) comprises a second pin (7) supporting the second end (48) of said flexible element, said second pin (7) being fixed to the load by a fixing member (8), said first and second pins of each link arm being parallel to each other and perpendicular to the flexible element (4) when the device is in its initial position.

4. A device according to any one of claims 1 to 3, **characterised in that** said at least one movement transmission means (20) comprises an actuator formed by a stator element (29) fixed to the support element (2), said stator element (29) supporting a turntable (24) having a retaining element (25) fixed eccentrically on said turntable and having attached thereto a first ball-and-socket joint (22) disposed at one end of a connecting rod (21), a second ball-and-socket joint (23) disposed at the opposite end of said connecting rod being attached to a retaining element (28) disposed on the supported load, said first and second ball-and-socket joints provided at the ends of the connecting rod being free to rotate about their respective retaining elements.

5. A device according to any one of claims 1 to 3, **characterised in that** said at least one movement transmission means (20) comprises an actuator formed by a stator element (29) fixed to the support element (2), said stator element (29) supporting a turntable (24) having a first hinge with a single degree of freedom fixed eccentrically on said turntable and connected to a first end of a flexible element (4), the second end of said flexible element being connected to the load via a second hinge having a single degree of freedom.

6. A device according to claim 4 or 5, **characterised in that** the stator element (29) comprises a motor for positioning the turntable (24).

7. A device according to claim 4 or 5, **characterised in that** the stator element (29) comprises a mechanism for driving the turntable (24), said mechanism being irreversible.

8. A pointing device according to any one of claims 1 to 7, **characterised in that** the flexible element (4) comprises a laminated structure made up of a stack of a plurality of laminations (45).

9. A device according to claim 8, **characterised in that** each of the laminations (45) of the plurality of laminations comprises a metal lamination (451) covered in a resilient material (452).

10. A device according to claim 9, **characterised in that** the metal constituting said lamination (451) is stainless steel and **in that** the resilient covering material (452) is vulcanized rubber or silicone compression-bonded on the metal.

11. A device according to any one of claims 1 to 10, **characterised in that** it comprises two movement transmission means (20, 50) disposed in two distinct directions.

12. A device according to any one of claims 1 to 11, **characterised in that** said moving link means comprise four link arms (41, 42, 43, 44) disposed uniformly around the supported load.

13. A device according to any one of claims 1 to 11, **characterised in that** said moving link means comprise five link arms distributed uniformly around the supported load.

14. A device according to any one of claims 1 to 13, **characterised in that** the support element (2) is a portion of the external structure of an apparatus (102).

15. A device according to any one of claims 1 to 14, **characterised in that** the load comprises a plasma thruster, an antenna, a light emitter, or a light receiver.

16. A pointing system (200) comprising a plurality of pointing devices (201, 201') according to any one of claims 1 to 15, said devices being placed side by side and two adjacent devices using at least one movement transmission means (220) in common.

17. A system onboard a launcher (300), said system comprising an apparatus (302) having at least one load (303) supported by a pointing device (301) according to any one of claims 1 to 15 or a pointing system according to claim 16.

## Patentansprüche

1. Orientierungsvorrichtung (1) zum Abstützen einer Last auf einem Abstützelement (2), wobei die Last über dem Abstützelement (2) durch eine bewegliche Verbindungseinrichtung abgestützt ist,
**dadurch gekennzeichnet, dass** die bewegliche Abstützeinrichtung mindestens drei separate Verbindungsarme (41, 42, 43) aufweist, welche um die Last verteilt sind, wobei jeder Verbindungsarm ein flexibles Element (4) mit einem ersten Ende (47), das mit dem Abstützelement (2) über ein erstes Gelenk mit einem einzigen Freiheitsgrad (9) verbunden ist, und mit einem zweiten Ende (48), welches mit der Last durch ein zweites Gelenk mit einem einzigen Freiheitsgrad (10) verbunden ist, und
**dadurch gekennzeichnet, dass** die Orientierungsvorrichtung ferner mindestens eine Einrichtung zur Bewegungsübertragung (20) aufweist, welche zwischen dem Abstützelement und der Last angeordnet ist, um die Last relativ zu dem Abstützelement zu orientieren.

2. Vorrichtung nach Anspruch 1, **dadurch gekennzeichnet, dass** die Last ferner eine Befestigungshalterung (31) aufweist, wobei die Halterung mit den mindestens drei Verbindungsarmen verbunden ist.

3. Vorrichtung nach Anspruch 1 oder 2, **dadurch gekennzeichnet, dass** in jedem Verbindungsarm das erste Gelenk (9) eine erste Rotationsachse aufweist, welche das erste Ende (47) des flexiblen Elements (4) abstützt, wobei die erste Rotationsachse (5) an dem Abstützelement (2) durch ein Befestigungsorgan (6) befestigt ist, und dass das zweite Gelenk (10) eine zweite Rotationsachse (7) aufweist, welche das zweite Ende (48) des flexiblen Elements abstützt, wobei die zweite Rotationsachse (7) an der Last durch ein Befestigungsorgan (8) befestigt ist, wobei die erste und zweite Rotationsachse jedes Verbindungsarms zueinander parallel und zu dem flexiblen Element (4) rechtwinklig sind, wenn die Vorrichtung in ihrer Intialposition ist.

4. Vorrichtung nach einem der Ansprüche 1 bis 3, **dadurch gekennzeichnet, dass** die mindestens eine Einrichtung zur Bewegungsübertragung (20) einen Aktuator aufweist, welcher von einem Statorelement (29) gebildet ist, welches an dem Abstützelement (2) befestigt ist, wobei das Statorelement (29) eine Drehplatte (24) mit einem Halteelement (25) trägt, welches exzentrisch an der Drehplatte (24) befestigt ist und mit welchem ein erstes Kugelgelenk (22) verbunden ist, welches am Ende einer Stange (21) angeordnet ist, wobei ein zweites Kugelgelenk (23) am anderen Ende der Stange angeordnet mit einem Halteelement (28) verbunden ist, welches auf der abgestützten Last angeordnet ist, wobei das erste und zweite an den Enden der Stange vorgesehene Kugelgelenk sich frei um sein jeweiliges Halteelement drehen kann.

5. Vorrichtung nach einem der Ansprüche 1 bis 3, **dadurch gekennzeichnet, dass** die mindestens eine Einrichtung zur Bewegungsübertragung (20) einen Aktuator aufweist, welcher aus einem Statorelement gebildet ist, das an dem Abstützelement (2) befestigt ist, wobei das Statorelement (29) eine Drehplatte (24) mit einem ersten Gelenk mit einem einzigen Freiheitsgrad trägt, welches exzentrisch auf der Platte befestigt und mit einem ersten Ende eines flexiblen Elements (4) verbunden ist, wobei das zweite Ende des flexiblen Elements mit der Last durch ein zweites Gelenk mit einem einzigen Freiheitsgrad verbunden ist.

6. Vorrichtung nach Anspruch 4 oder 5, **dadurch gekennzeichnet, dass** das Statorelement (29) einen Motor zum Positionieren der Drehplatte (24) aufweist.

7. Vorrichtung nach Anspruch 4 oder 5, **dadurch gekennzeichnet, dass** das Statorelement (29) einen Mechanismus zum Antrieb der Drehplatte (24) aufweist, welcher irreversibel ist.

8. Orientierungsvorrichtung nach einem der Ansprüche 1 bis 7, **dadurch gekennzeichnet, dass** das flexible Element (4) eine Schichttruktur aufweist, welche aus einem Stapel mehrerer Lagen (45) gebildet ist.

9. Vorrichtung nach Anspruch 8, **dadurch gekennzeichnet, dass** jede der Lagen (45) der Mehrzahl von Lagen auf einer Metalllage (451) gebildet ist, welche mit einem elastischen Material (452) bedeckt ist.

10. Vorrichtung nach Anspruch 9, **dadurch gekennzeichnet, dass** das Metall, welches die Lage (451) bildet, rostfreier Stahl ist und dass das elastische Material (452) der Bedeckung vulkanisierter Kautschuk oder Silikon ist, welche durch Druck mit dem Metall verbunden ist.

11. Vorrichtung nach einem der Ansprüche 1 bis 10, **dadurch gekennzeichnet, dass** sie zwei Einrichtungen zur Bewegungsübertragung (20, 50) aufweist, welche in zwei unterschielichen Richtungen angeordnet sind.

12. Vorrichtung nach einem der Ansprüche 1 bis 11, **dadurch gekennzeichnet, dass** die beweglichen Verbindungseinrichtungen vier Verbindungsarme (41, 42, 43, 44) aufweisen, welche gleichmäßig um die gestützte Last angeordnet sind.

13. Vorrichtung nach einem der Ansprüche 1 bis 11, **dadurch gekennzeichnet, dass** die beweglichen Verbindungseinrichtungen fünf Verbindungsarme aufweisen, welche gleichmäßig um die gestützte Last verteilt sind.

14. Vorrichtung nach einem der Ansprüche 1 bis 13, **dadurch gekennzeichnet, dass** das Abstützelement (2) Teil der externen Struktur eines Gerätes (102) ist.

15. Vorrichtung nach einem der Ansprüche 1 bis 14, **dadurch gekennzeichnet, dass** die Last einen Plasmaantrieb, eine Antenne, einen optischen Strahler oder einen optischen Rezeptor aufweist.

16. Orientierungssystem (200), aufweisend eine Mehrzahl von Orientierungsvorrichtungen (201, 201'), gemäß einem der Ansprüche bis 15, wobei die Vorrichtungen nebeneinander angeordnet sind und zwei benachbarte Vorrichtungen mindestens eine Einrichtung zur Bewegungsübertragung (220) gemeinsam nutzen.

17. System an Bord eines Trägers, wobei das System ein Gerät (302) mit mindestens einer Last (303) aufweist, welche durch eine Orientierungsvorrichtung (301) gemäß einem der Ansprüche 1 bis 15 oder ein Orientierungssystem gemäß Anspruch 16 gestützt wird.
